**Europäisches Patentamt**

**European Patent Office**

**Office européen des brevets**

(19)

(11) Veröffentlichungsnummer : **0 432 627 B1**

(12) # EUROPÄISCHE PATENTSCHRIFT

(45) Veröffentlichungstag der Patentschrift :
**02.03.94 Patentblatt 94/09**

(51) Int. Cl.⁵ : **G01F 1/80**

(21) Anmeldenummer : **90123339.5**

(22) Anmeldetag : **05.12.90**

(54) **Vorrichtung zur Messung eines Massestromes.**

(30) Priorität : **08.12.89 DE 3940576**

(43) Veröffentlichungstag der Anmeldung :
**19.06.91 Patentblatt 91/25**

(45) Bekanntmachung des Hinweises auf die
Patenterteilung :
**02.03.94 Patentblatt 94/09**

(84) Benannte Vertragsstaaten :
**AT FR GB SE**

(56) Entgegenhaltungen :
**DE-A- 2 143 826**
**DE-C- 3 507 993**

(73) Patentinhaber : **CRA SERVICES LIMITED**
**55 Collins Street**
**Melbourne, VA 3001 (AU)**

(72) Erfinder : **Fassbinder, Hans-Georg, Dr. rer. nat.**
**Am Annaschacht 32**
**W-8458 Sulzbach-Rosenberg (DE)**

(74) Vertreter : **Kador & Partner**
**Corneliusstrasse 15**
**D-80469 München (DE)**

EP 0 432 627 B1

Jouve, 18, rue Saint-Denis, 75001 PARIS

EP 0 432 627 B1

**Beschreibung**

Die Erfindung bezieht sich auf eine Vorrichtung gemäß dem Oberbegriff des Patentanspruchs 1. Eine derartige Vorrichtung ist aus der DE-PS 35 07 993 bekannt.

In jüngster Zeit wurden chemische und metallurgische Verfahren entwickelt, bei denen pulverförmige oder feinkörnige Stoffe untereinander oder mit flüssigen oder gasförmigen Stoffen in genau definiertem stöchiometrischem Verhältnis in einem kontinuierlichen Prozeß zur Reaktion gebracht werden. Als Beispiel seien die Vergasung von Kohle oder die Schmelzreduktion von Eisenerzen genannt. Diese Verfahren erfordern es, die Masseströme mehrerer Komponenten aufeinander abzustimmen, was die Messung und Regelung dieser Masseströme voraussetzt. Hierzu ist eine Klasse von Meßvorrichtungen bekannt, welche auf dem Prinzip einer Messung derjenigen Kraft basieren, die aufgewendet werden muß, um einem linear durch eine Rohrleitung strömenden Massestrom eine bestimmte Winkelgeschwindigkeit bzw. tangentiale Geschwindigkeitskomponente aufzuprägen. Die dazu erforderliche Kraft ist dem Massestrom direkt proportional. Es gilt die Beziehung
Drehmoment = k x Winkelgeschwindigkeit x Massestrom.

Wird daher die Winkelgeschwindigkeit konstant gehalten, so ist der Massestrom eine lineare Funktion des Drehmomentes. Zur Messung des Drehmomentes wird bei dieser Klasse von Meßvorrichtungen der Massestrom axial auf ein Drehelement geleitet, das mit radial verlaufenden Leitschaufeln besetzt ist. Das Drehelement wird von einem Synchronmotor mit konstanter Drehzahl angetrieben. Die Veränderung des Antriebsmomentes stellt ein direktes Maß für die Schwankungen des Massestromes dar. Das Hauptproblem besteht darin, das Antriebsmoment genügend genau zu messen. Naturgemäß wird die Welle des Drehelementes nicht nur vom Massestrom, sondern auch von Reibungskräften gebremst. Diese Reibungskräfte verändern sich sehr stark bei Temperaturschwankungen, da sich die Zähigkeit der für die Wellenlagerung benötigten Schmierstoffe ändert.

Zur Kompensation dieser Störmomente ist es aus der DE-PS 35 07 993 bekannt, die in einem Trägerelement angeordnete Zwischenwelle eines Antriebs-Stirnradgetriebes für das Drehelement um die zu dem Drehelement koaxiale Abtriebswelle des Getriebes schwenkbar zu lagern, wobei die Schwenkbewegung der Zwischenwelle bzw. des Trägerelementes von einer Kraftmeßeinrichtung begrenzt wird. Auf der Zwischenwelle ist ein Getriebestirnrad mit dem Teilkreisradius $R_2$ angeordnet, das mit einem das Drehelement antreibenden Abtriebs-Stirnrad (Teilkreisradius $R_1$) kämmt. Ferner ist auf der Zwischenwelle ein Getriebe-Stirnrad mit dem Teilkreisradius $R_3$ angeordnet, das mit dem Ritzel des Synchronmotors im Eingriff steht. Das Leerlaufreibmoment der Abtriebswelle hat keinen Einfluß auf das Meßsignal, wenn die Bedingung erfüllt ist:

$$\frac{R_3 - R_2}{R_1} = \frac{RM_Z}{RM_A}, \quad (1)$$

wobei $R_1$, $R_2$, $R_3$     die Teilkreisradien der Getrieberäder,
$RM_Z$     das Reibmoment der Zwischenwelle
und $RM_A$     das Reibmoment der Abtriebswelle
bedeuten.
Das Meßmoment $M_S$ ergibt sich dann zu:

$$M_S = \left(\frac{R_3 - R_2}{R_3}\right) \cdot \left(\frac{R_1 + R_2}{R_1}\right) \cdot M_A, \quad (2)$$

wobei $M_A$ das Abtriebsmoment bedeutet.

In der Gleichung (2) ist der erste Klammerausdruck zwangsläufig kleiner 1 und insbesondere gleich 0,5. Der zweite Klammerausdruck ist unter üblichen konstruktiven Auslegungen etwa gleich 2, so daß das Meßmoment etwa gleich dem Abtriebsmoment ist. Für sehr kleine Abtriebsmomente entsprechend sehr geringen Masseströmen läßt sich mit der bekannten Meßvorrichtung das dann ebenfalls sehr kleine Meßmoment nicht mehr mit hinreichender Genauigkeit erfassen.

Die Aufgabe der Erfindung besteht demgegenüber darin, eine Meßvorrichtung der eingangs erwähnten Art dahingehend zu verbessern, daß auch bei sehr geringen Masseströmen noch eine ausreichende Meßgenauigkeit gewährleistet ist.

Diese Aufgabe wird erfindungsgemäß durch eine Vorrichtung mit den kennzeichnenden Merkmalen des Patentanspruchs 1 gelöst.

Vorteilhafte Ausgestaltungen der erfindungsgemäßen Meßvorrichtung ergeben sich aus den Unteransprüchen.

Die Erfindung beruht auf der Überlegung, das Meßmoment größer, insbesondere 4-mal so groß wie das Abtriebsmoment zu wählen, so daß gegenüber dem Stand der Technik nach der DE-PS 35 07 993 die Meßempfindlichkeit um den Faktor 4 verbessert wird. Der Meßbereich der bekannten Meßvorrichtung von 5 bis 50 kg/min läßt sich somit bei der erfindungsgemäßen Meßvorrichtung auf 1 bis 10 kg/min verbessern.

2

Die Erfindung wird anhand eines in den Zeichnungen dargestellten Ausführungsbeispiels näher erläutert. Es zeigt:

Fig. 1       einen Längsschnitt durch ein Ausführungsbeispiel der erfindungsgemäßen Meßvorrichtung, und

Fig. 2       einen Querschnitt durch die Meßvorrichtung nach Fig. 1 längs der Schnittlinie II-II, wobei die Schnittführung des Längsschnittes nach Fig. 1 in dem Querschnitt nach Fig. 2 längs der geknickten Schnittlinie I-I angedeutet ist.

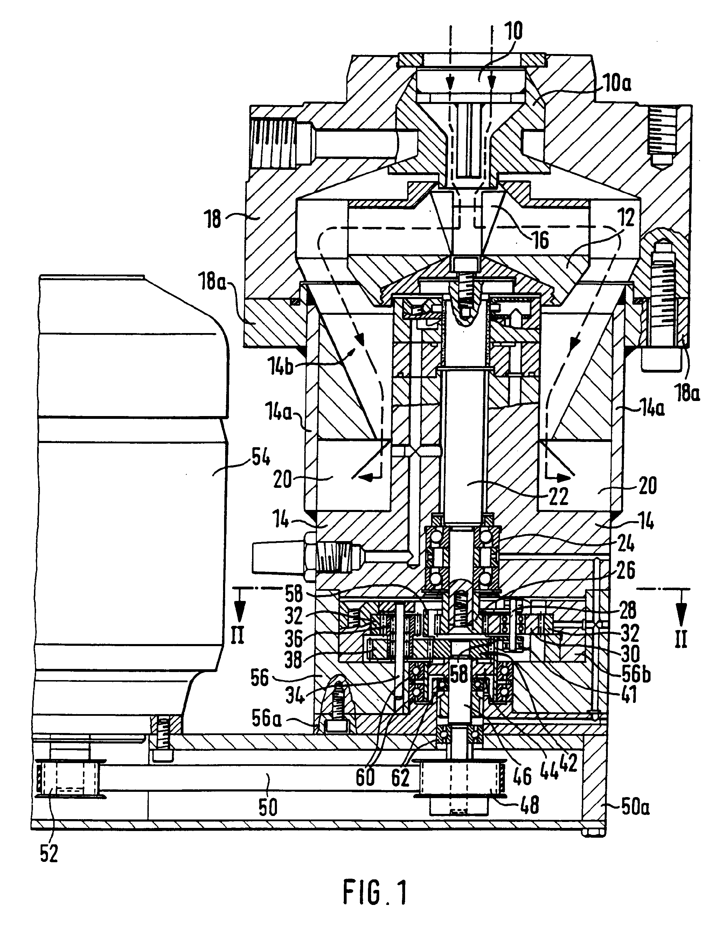

Die in Fig. 1 im Längsschnitt dargestellte Meßvorrichtung weist einen rechteckförmigen Gehäuseabschnitt 14 auf, in welchem die Antriebswelle 22 eines als Flügelrad ausgebildeten Drehelementes 12 mittels Wälzlager 24 drehbar gelagert ist. Das Drehelement 12 ist am oberen axialen Ende der Antriebswelle 22 drehfest angebracht, beispielsweise angeschraubt. Das Drehelement 12 wird von einem Gehäusekopf 18 umschlossen, welcher auf einen Ringflansch 18a dichtend aufgeschraubt ist. Der Ringflansch 18a ist auf seiner Innenseite mit einem Ring 14a verbunden, beispielsweise verschweißt, der seinerseits auf den rechteckförmigen Gehäuseabschnitt 14 aufgesteckt ist und mit diesem verbunden, beispielsweise verschweißt ist.

Der Gehäusekopf 18 weist eine axiale Einmündungsöffnung 10 für pulverförmige oder feinkörnige Stoffe auf, welche trichterförmig ausgebildet ist und von einem koaxialen Einsatzstück 10a gebildet wird, das in die Deckfläche des Gehäusekopfes 18 eingepaßt ist. Unterhalb des Auslasses des Einsatzstückes 10a befindet sich die zentrale Aufgabezone des Drehelementes 12, welches aus einem horizontalen Drehteller mit aufgesetzten Leitschaufeln 16 besteht. Der das Drehelement 12 axial von oben beaufschlagende Massestrom aus pulverförmigen oder feinkörnigen Stoffen wird durch die Leitschaufeln 16 aus seiner axialen Richtung abgelenkt und erhält eine tangentiale Geschwindigkeitskomponente. Das Drehelement 12 weist dabei so viele Leitschaufeln 16 auf, daß sämtliche Masseteilchen bei Verlassen des Drehelementes 12 eine Winkelgeschwindigkeit besitzen, welche mit der Antriebsgeschwindigkeit des Drehelementes 12 übereinstimmt. Die ungefähre Bewegungsbahn der Teilchen durch die Einmündungsöffnung 10 und durch das Drehelement 12 sind in Fig. 1 mit gestrichelten Pfeilen angedeutet. Wie man erkennt, werden die Masseteilchen nach Verlassen des Drehelementes 12 in einen kegeligen Ringkanal 14b umgelenkt, welcher rotationssymetrisch zur Achse der Antriebswelle 22 innerhalb des Gehäusekopfes 18 und des rechteckförmigen Gehäuseabschnittes 14 verläuft. Der Ringkanal 14b mündet in einen horizontalen Ringkanal 20, aus welchem der Massestrom in tangentialer Richtung bezüglich der Achse der Antriebswelle 22 bzw. des Drehelementes 12 aus der Meßvorrichtung austritt. Die Querschnittsfläche des nicht dargestellten Auslasses aus dem horizontalen Ringkanal 20 entspricht wenigstens der Querschnittsfläche der axialen Einmündungsöffnung 10 für den Massestrom.

Zum Antrieb der Antriebswelle 22 ist ein Synchronmotor 54 vorgesehen, welcher achsparallel zu dem rechteckförmigen Gehäuseabschnitt 14 angeordnet ist und über seine Abtriebs-Riemenscheibe 52 einen Zahnriemen 50 treibt. Der Zahnriemen 50 liegt auf einer Antriebs-Riemenscheibe 48 auf, welche in noch näher zu beschreibender Weise mit der Antriebswelle 22 getrieblich verbunden ist. Diese Getriebeverbindung befindet sich innerhalb eines Getriebegehäuses 56, das an seiner Unterseite mit einem Deckel 56a abgeschlossen und mit seiner Oberseite an die Unterseite des rechteckförmigen Gehäuseabschnitts 14 bündig angesetzt ist. Der Deckel 56a trägt ein Zahnriemengehäuse 50a, welches den Synchronmotor 54 haltert.

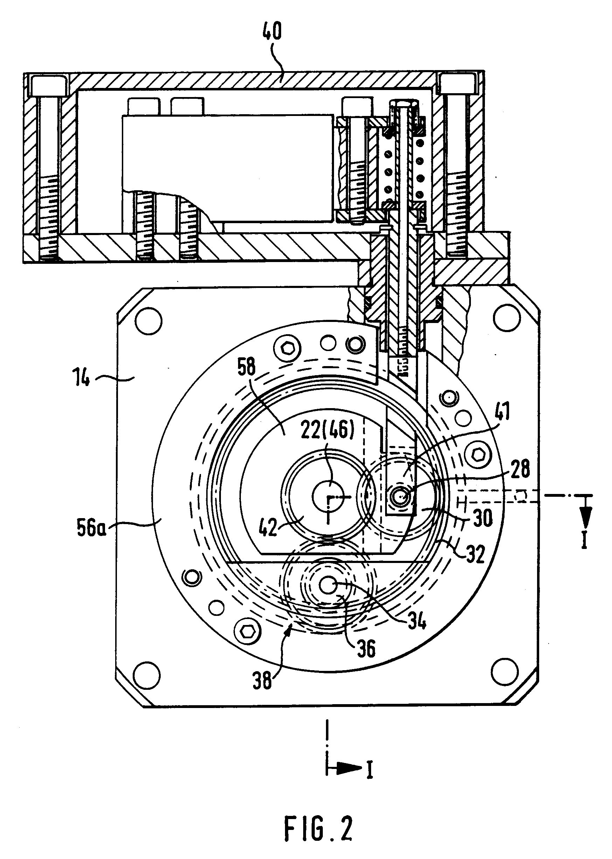

Die Antriebs-Riemenscheibe 48 ist mit einer Welle 46 drehfest verbunden, welche über zwei Wälzlager 62 im Deckel 56a des Getriebegehäuses 56 drehbar gelagert ist. Die Welle 46 ist dabei in axialer Verlängerung der Antriebswelle 22 angeordnet. Am oberen axialen Ende der Welle 46 ist ein GetriebeStirnrad 42 drehfest angebracht, welches mit einem GetriebeStirnrad 38 kämmt. Das Stirnrad 38 ist auf einer Welle 34 gelagert, welche mit ihrem unteren Ende im Getriebegehäuse 56 und mit ihrem oberen Ende in einem radialen Ansatz einer Ausfütterung 56b der Innenwand des Getriebegehäuses 56 befestigt ist. Das Stirnrad 38 ist in axialer Verlängerung mit einem Ritzel 32 drehfest verbunden, welches mit einem innenverzahnten Zahnkranz 32 kämmt. Der Zahnkranz 32 ist in eine entsprechende Ringnut der Ausfütterung 56b eingesetzt und dreht sich gleitend in dieser Ringnut. Der Zahnkranz 32 kämmt ferner mit einem Getriebe-Stirnrad 30, das in Fig. 1 um 180° bezüglich des Ritzels 36 versetzt gezeichnet ist. Wie aus der Draufsicht gemäß Fig. 2 hervorgeht, welche die Schnittlinie I-I der Fig. 1 zeigt, ist tatsächlich das Stirnrad 30 bezüglich des Ritzels 34 nur um 90° bezogen auf die Achse der Antriebswelle 22 bzw. der Welle 46 versetzt angeordnet.

Das Stirnrad 30 ist auf einer Zwischenwelle 28 mittels Wälzlager drehbar gelagert und kämmt mit einem weiteren Getriebe-Stirnrad 26, welches mit dem unteren Ende der Antriebswelle 22 starr verbunden ist und das Antriebs-Stirnrad für die Welle 22 bzw. das Abtriebs-Stirnrad der beschriebenen getrieblichen Verbindung darstellt. Zwischen dem Abtriebs-Stirnrad 26 und dem darunterliegenden Stirnrad 42 befindet sich ein enger radialer Spalt, welcher von Getriebeöl gefüllt ist. Ferner sind die Stirnräder 26 und 30 sowie der Zahnkranz 32 in einer gemeinsamen Radialebene bezüglich der Achse der Antriebswelle 22 angeordnet.

Die Zwischenwelle 28 ist an ihren beiden axialen Enden drehfest in einem Trägerelement 58 gehalten, welches hülsenförmig mit einer aus Fig. 2 ersichtlichen Form ausgebildet ist. Das Trägerelement 58 ist an der Innenwand des Getriebegehäuses 56 mittels zweier Wälzlager 60 frei drehbar gelagert und weist an seiner Mantelfläche einen segmentförmigen Schlitz auf, durch welchen das Stirnrad 38 für die Getriebeverbindung mit dem Stirnrad 42 hindurchgreift. Dort, wo die Zwischenwelle 28 in dem Trägerelement 58 gehaltert ist, ist das Trägerelement 58 mit oberen und unteren, flanschförmigen Auslegern versehen, zwischen denen sich das Stirnrad 30 um die Zwischenwelle 28 dreht.

An den axialen Enden der Zwischenwelle 28 sind die beiden Schenkel eines zangenförmigen Meßfingers 41 angebracht, welcher in der Draufsicht gemäß Fig. 2 gut erkennbar ist. Der Meßfinger 41 führt zu einer Kraftmeßeinrichtung 40, welche an den rechteckförmigen Gehäuseabschnitt 14 der Meßvorrichtung angesetzt ist. Wird die Meßvorrichtung von einem Massestrom bestimmter Größe durchströmt, muß zur Aufrechterhaltung einer bestimmten konstanten Winkelgeschwindigkeit des Drehelementes 12 ein Drehmoment bestimmter Größe übertragen werden. Das praktisch reibungsfrei bezüglich des Getriebegehäuses 56 gelagerte Trägerelement 58 verdreht sich unter Wirkung des reaktiven Drehmomentes um einen bestimmten kleinen Winkelbetrag, der zu einer Verlagerung des Meßfingers 41 der Kraftmeßeinrichtung 40 führt. Je größer die Verlagerung des Meßfingers 41 ist, desto größer ist auch die von der Kraftmeßeinrichtung 40 gelieferte und gemessene Gegenkraft, welche ein direktes Maß für den das Drehelement 12 durchsetzenden Massestrom darstellt.

Unterhalb des Stirnrades 42 ist auf der Welle 46 ferner ein Rotationskörper 44 drehfest gelagert, welcher radial bis an die Innenwand des ihn umschließenden Trägerelementes 58 reicht. Der Axialspalt zwischen dem Rotationskörper 44 und der Innenwand des Trägerelementes 58 ist mit Öl gefüllt, so daß ein hydrodynamischer Reibschluß zwischen dem Rotationskörper 44 einerseits und dem Trägerelement 58 hergestellt wird. Ein weiterer hydrodynamischer Reibschluß besteht, wie schon erwähnt, zwischen dem Rotationskörper 44 bzw. dem darüber liegenden Stirnrad 42 und dem Abtriebsstirnrad 26 über den Radialspalt zwischen beiden Stirnrädern 26 und 42. Der Rotationskörper 44 dreht sich dabei im gleichen Drehsinn wie die Welle 46 und damit im gleichen Drehsinn wie die Antriebswelle 22, wobei die Drehzahl der Welle 46 wesentlich größer ist als die Drehzahl der Antriebswelle 22. Anstelle eines Reibschlusses zwischen Rotationskörper 44 und sowohl dem Trägerelement 58 als auch dem Stirnrad 26 kann alternativ nur ein Reibschluß zwischen Rotationskörper 44 und Stirnrad 26 oder zwischen Rotationskörper 44 und Trägerelement 58 vorgesehen werden. Es ist ferner alternativ möglich, nicht die Welle 46, sondern die Welle 34 durch den Motor 54 anzutreiben, so daß der Rotationskörper 44 im Nebenschluß zu der Antriebswelle 22 angetrieben wird.

Die Ölzuführungsleitungen zu den Wellen, Wälzlagern und dem Zahnkranz der Meßvorrichtung sind in Fig. 1, welche eine Konstruktionszeichnung darstellt, im einzelnen eingezeichnet und brauchen nicht weiter beschrieben zu werden, da sie für das Verständnis der Erfindung nicht weiter erforderlich sind.

Der hydrodynamische Reibschluß über die Getriebeölfüllung zwischen Rotationskörper 44 einerseits und Trägerelement 58 und/oder Stirnrad 26 wird in seiner Stärke so abgestimmt, daß das Reibmoment des Rotationskörpers 44 infolge der gleichsinnigen Drehung von Rotationskörper 44 und Antriebswelle 22 die Reibmomente der Antriebswelle und der Zwischenwelle 28 kompensiert. Falls nur ein Reibschluß zwischen dem Rotationskörper 44 und der Abtriebswelle 22 vorhanden ist (wobei der Rotationskörper 44 wesentlich schneller dreht als das Stirnrad 26) gilt:

$$RM_{Rot} = ( \frac{R_1 + R_2}{R_1} ) \cdot RM_Z + RM_A \quad (3)$$

wobei

$RM_{Rot}$        das Reibmoment des Rotationskörpers 44

$RM_A$        das Reibmoment der Abtriebswelle 22

$RM_Z$        das Reibmoment der Zwischenwelle 28

$R_1$        der Teilkreisradius des Abtriebs-Stirnrades 26 auf der zum Drehelement 12 führenden Antriebswelle 22

$R_2$        der Teilkreisradius des mit dem Abtriebs-Stirnrad 26 kämmenden Stirnrades 30 auf der Zwischenwelle 28

bedeuten.

Falls nur ein Reibschluß zwischen dem Rotationskörper 44 und dem Trägerelement 58 vorhanden ist, gilt:

$$RM_{Rot} = ( \frac{R_1 + R_2}{R_1} ) \cdot RM_Z + 2 \cdot ( \frac{R_1 + R_2}{R_1} ) \cdot RM_A \quad (4)$$

Wegen der Kompensation der Reibmomente $RM_A$ und $RM_Z$ ergibt sich das gemessene Drehmoment $M_S$ des Trägerelementes 58 zu:

$$M_S = 2 \cdot ( \frac{R_1 + R_2}{R_1} ) \cdot M_A \quad (5)$$

wobei $M_A$ das Abtriebsmoment der Welle 22 bedeutet. Da der Klammerausdruck in Gl. (5) bei üblicher konstruktiver Auslegung gleich 2 ist, ist das Meßmoment viermal so groß wie das Abtriebsmoment.

## Patentansprüche

1. Vorrichtung zur Messung eines vorzugsweisen heterogenen Massestromes, mit einem von einer Hauptwelle (22) getragenen Drehelement (12), das mit konstanter Drehzahl angetrieben wird und das den axial das Drehelement beaufschlagenden Massestrom radial umlenkt und ihm dabei eine tangentiale Geschwindigkeitskomponente erteilt, wobei an der Hauptwelle (22) das vom Massestrom abhängige Drehmoment gemessen wird, mit einem an der Hauptwelle (22) angebrachten ersten Stirnrad (26), das mit einem zweiten Stirnrad (30) im Eingriff ist, welches zweite Stirnrad in einem Trägerelement (58) gelagert ist, das seinerseits drehbar um die Achse der Hauptwelle (22) gelagert ist und von einer Kraftmeßeinrichtung (40) in seiner Lage festgehalten wird, und mit einem innenverzahnten Zahnkranz (32), welcher von einem mit einem Antriebsmotor (54) getrieblich verbundenen Antriebsritzel (36) in Drehung versetzt wird und seinerseits das zweite Stirnrad (36) antreibt, **dadurch gekennzeichnet,** daß der innenverzahnte Zahnkranz (32) einen Zahneingriff mit dem zweiten Stirnrad (30) aufweist, daß unterhalb des ersten Stirnrades (26) auf einer in axialer Verlängerung der Hauptwelle (22) angeordneten Zusatzwelle (46) ein Rotationskörper (44) drehfest gelagert ist, wobei die Zusatzwelle (46) mit dem Antriebsmotor (54) gekoppelt ist und bei gleichem Drehsinn wie die Hauptwelle (22) eine wesentlich größere Drehzahl als die Hauptwelle (22) aufweist, und daß der Rotationskörper (44) über einen hydrodynamischen Reibschluß mit dem Trägerelement (58) und/oder mit dem ersten Stirnrad (26) verbunden ist, wobei die Stärke des hydrodynamischen Reibschlusses so abgestimmt ist, daß die Reibmomente des ersten und zweiten Stirnrades (26 bzw. 30) durch das Reibmoment des hydrodynamischen Reibschlusses kompensiert werden.

2. Vorrichtung nach Anspruch 1, dadurch gekennzeichnet, daß der Rotationskörper (44) radial bis an die Innenwand des ihn umschließenden Trägerelementes (58) reicht, wobei der Axialspalt zwischen dem Rotationskörper (44) und der Innenwand des Trägerelementes (58) mit Öl gefüllt ist, so daß ein hydrodynamischer Reibschluß zwischen dem Rotationskörper (44) und dem Trägerelement (58) hergestellt ist.

3. Vorrichtung nach Anspruch 1 oder 2, dadurch gekennzeichnet, daß der Rotationskörper (44) über einen ölgefüllten Radialspalt mit dem darüber angeordneten ersten Stirnrad (26) einen hydrodynamischen Reibschluß aufweist.

4. Vorrichtung nach einem der Ansprüche 1 bis 3, dadurch gekennzeichnet, daß die Zusatzwelle (44) drehfest mit dem Antriebsmotor (54) gekoppelt ist und über eine Getriebeverbindung (42, 38) den Zahnkranz (32) und damit die Hauptwelle (22) treibt.

5. Vorrichtung nach einem der Ansprüche 1 bis 3, dadurch gekennzeichnet, daß die Zusatzwelle (46) im Nebenschluß zu der Hauptwelle (22) angetrieben wird.

## Claims

1. An apparatus for measuring a preferably heterogeneous mass stream, having a rotary member (12) carried by a main shaft (22) and driven at constant speed, said rotary member deflecting radially the mass stream acting axially upon the rotary member, thereby giving it a tangential velocity component, whereby the torque dependent on the mass stream is measured on the main shaft (22), a first spur wheel (26) mounted on the main shaft (22) and meshing with a second spur wheel (30) mounted in a carrier member (58) which is in turn mounted so as to rotate about the axis of the main shaft (22) and held in position by a force-sensing device (40), and an internal toothed wheel rim (32) which is set rotating by a driving pinion (36) in geared connection with a drive motor (54) and in turn drives the second spur wheel (30), **characterized** in that the internal toothed wheel rim (32) is in toothed engagement with the second spur wheel (30), below the first spur wheel (26) a rotational body (44) is mounted, so as to rotate therewith, on an additional shaft (46) disposed as an axial prolongation of the main shaft (22), the additional shaft (46) being coupled with the drive motor (54) and having a substantially higher speed than the main shaft (22) in the same direction of rotation as the main shaft (22), and the rotational body (44) is connected via a hydrodynamic frictional engagement with the carrier member (58) and/or with the first spur wheel (26), the strength of the hydrodynamic frictional engagement being coordinated in such a way that the moments of friction of the first and second spur wheels (26, 30) are compensated by the moment of friction of the hydrodynamic frictional engagement.

2. The apparatus of claim 1, characterized in that the rotational body (44) extends radially as far as the inside wall of the carrier element (58) surrounding it, whereby the axial gap between the rotational body (44) and the inside wall of the carrier element (58) is filled with oil so as to establish a hydrodynamic frictional engagement between the rotational body (44) and the carrier member (58).

3. The apparatus of claim 1 or 2, characterized in that the rotational body (44) is in hydrodynamic frictional engagement with the first spur wheel (26) disposed thereabove via a radial gap filled with oil.

4. The apparatus of one of claims 1 to 3, characterized in that the additional shaft (44) is coupled with the drive motor (54) so as to rotate therewith and drives the wheel rim (32) and thus the main shaft (22) via a geared link (42, 38).

5. The apparatus of one of claims 1 to 3, characterized in that the additional shaft (46) is driven in shunt with the main shaft (22).


**Revendications**

1. Dispositif pour mesurer un débit massique, de préférence hétérogène, comportant, supporté par un arbre principal (22), un élément rotatif (12) qui est entraîné à une vitesse de rotation constante et qui dévie radialement le débit massique agissant axialement sur ledit élément rotatif et lui confère ainsi une composante de vitesse tangentielle, le couple de rotation dépendant dudit débit massique étant mesuré sur l'arbre principal, ce dispositif comportant un premier pignon droit (26) fixé sur l'arbre principal (22), en prise avec un deuxième pignon droit (30) lequel est monté dans un élément support (58) qui pour sa part est monté de manière rotative autour de l'axe de l'arbre principal (22) et fixé dans sa position par un dispositif dynamométrique (40), ainsi qu'une couronne dentée (32) à denture intérieure, qui est mise en rotation par un pignon d'entraînement (36) mécaniquement relié à un moteur d'entraînement (54) et entraîne le deuxième pignon fixe (36), caractérisé en ce que la couronne à denture intérieure (32) s'engrène sur le deuxième pignon droit (30), en ce que sous le premier pignon droit (26) est monté de manière fixe, sur un arbre complémentaire (46) qui prolonge axialement l'arbre principal (22), un corps de rotation (44), ledit arbre complémentaire (46) étant accouplé audit moteur d'entraînement (54) et tout en tournant dans le même sens que l'arbre principal (22) est animé d'une vitesse de rotation nettement supérieure à ce dernier, et en ce que le corps de rotation (44) est relié par friction hydrodynamique à l'élément support (58) et/ou au premier pignon frontal (26), l'intensité de cette friction hydrodynamique étant définie de telle sorte que les couples de frottement du premier et du deuxième pignons frontaux (26 et 30) sont compensés par le couple de frottement de la friction hydrodynamique.

2. Dispositif selon la revendication 1, caractérisé en ce que le corps de rotation (44) parvient radialement jusqu'à la paroi intérieure de l'élément support (58) qui l'entoure, l'interstice axial entre ce corps de rotation (44) et la paroi intérieure de l'élément support (58) étant rempli d'huile de façon à établir une friction hydrodynamique entre le corps de rotation (44) et l'élément support (58).

3. Dispositif selon la revendication 1 ou 2, caractérisé en ce que le corps de rotation (44) est en relation de friction hydrodynamique, à travers un interstice radial rempli d'huile, avec le premier pignon frontal (26) disposé au-dessus de cet interstice.

4. Dispositif selon l'une des revendications 1 à 3, caractérisé en ce que l'arbre complémentaire (44) est accouplé de manière fixe avec le moteur d'entraînement (54) et entraîne, par une liaison d'engrenage (42, 38), la roue dentée (32) et de ce fait l'arbre principal (22).

5. Dispositif selon l'une des revendications 1 à 3, caractérisé en ce que l'arbre complémentaire (46) est entraîné en parallèle à l'arbre principal (22).

FIG.1

FIG.2